# EUROPEAN PATENT APPLICATION

(11) **EP 4 180 175 A1**
(43) Date of publication of application: **17.05.2023**
(21) Application number: 21849533.1
(22) Date of filing: 25.03.2021
(51) Int. Cl.: B23Q 41/00, B23Q 3/155, B23Q 3/157

(54) **TOOL TRANSPORT SYSTEM, CONTROL METHOD FOR TOOL TRANSPORT SYSTEM, AND CONTROL PROGRAM FOR TOOL TRANSPORT SYSTEM**

(30) Priority: 28.07.2020 JP 2020127165
(71) Applicant: DMG Mori Co., Ltd., Yamatokoriyama-shi, Nara 639-1160 (JP)
(72) Inventor: YASUDA, Hiroshi, Yamatokoriyama-shi, Nara 639-1160 (JP); NAKAOKA, Hiromitsu, Yamatokoriyama-shi, Nara 639-1160 (JP); KUROISHI, Yuichi, Yamatokoriyama-shi, Nara 639-1160 (JP); TANAKA, Koji, Yamatokoriyama-shi, Nara 639-1160 (JP)
(74) Representative: Isarpatent
(86) International application number: PCT/JP2021/012530
(87) International publication number: WO 2022/024456

(57) **Abstract**

A tool transport system equipped with a tool storage portion that does not depend on the tool standard is awaited. The tool transport system includes a plurality of machine tools, and a tool storage portion having a plurality of holding parts. Each of the plurality of holding parts has a common holding mechanism capable of holding any of a plurality of tool holders. The tool transport system includes a transport device that transports a designated tool holder of the plurality of tool holders stored in the tool storage portion to a designated machine tool of the plurality of machine tools. A first tool holder of the plurality of tool holders has a common connection mechanism that is connectable to the common holding mechanism, and a first attachment mechanism to which a first tool to be used in a first machine tool of the plurality of machine tools is attachable. A second tool holder of the plurality of tool holders has the common connection mechanism, and a second attachment mechanism to which a second tool to be used in a second machine tool of the plurality of machine tools is attachable.

## Description

### TECHNICAL FIELD

The present disclosure relates to a tool transport system including a tool storage portion shared by a plurality of machine tools.

### BACKGROUND ART

An increased number of companies have administered a plurality of machine tools. As the number of machine tools to be administered increases, it becomes difficult to manage tools used in each machine tool. In this respect, PTL 1 (WO 2015/029232) discloses a tool management system that manages tools to be used in a plurality of machine tools.

### CITATION LIST

### PATENT LITERATURE

PTL 1: WO 2015/029232

### SUMMARY OF INVENTION

### TECHNICAL PROBLEM

In recent years, full automation of machining has been advanced. In order to realize full automation of machining, there is a need for a technique of automatically transporting a required tool to each machine tool. The tool management system disclosed in PTL 1 does not relate to such an automated tool transport technique.

A tool transport system includes a plurality of machine tools, a tool storage portion shared by the plurality of machine tools, and a transport device such as a robot. The transport device takes a designated tool out of the tool storage portion, and carries the tool into a designated machine tool. Also, the transport device carries a tool that has been used out of a machine tool, and returns the tool to the tool storage portion. Thus, tools in the tool storage portion are shared by a plurality of machine tools.

The standard of the tool that can be used is determined depending on the type of the machine tool. If it is necessary to provide a tool storage portion for each tool standard, it is necessary to assemble the tool storage portion in accordance with the machine tool to be introduced, resulting that the configuration of the tool transport system is complicated. Also, if it is necessary to provide a tool storage portion for each tool standard, such a situation arises that there is a vacancy in one tool storage portion, but there is no vacancy in another tool storage portion, resulting that spaces of the tool storage portions cannot be adequately utilized. Therefore, a tool storage portion that does not depend on the tool standard is awaited.

### SOLUTION TO PROBLEM

In one example of the present disclosure, the tool transport system includes a plurality of machine tools, and a tool storage portion having a plurality of holding parts. Each of the plurality of holding parts has a common holding mechanism capable of holding any of a plurality of tool holders. The tool transport system includes a transport device that transports a designated tool holder of the plurality of tool holders stored in the tool storage portion to a designated machine tool of the plurality of machine tools. A first tool holder of the plurality of tool holders has a common connection mechanism that is connectable to the common holding mechanism, and a first attachment mechanism to which a first tool to be used in the first machine tool of the plurality of machine tools is attachable. A second tool holder of the plurality of tool holders has the common connection mechanism, and a second attachment mechanism to which a second tool to be used in the second machine tool of the plurality of machine tools is attachable.

In one example of the present disclosure, the tool transport system includes a tool setup device that exchanges a tool holder with the transport device. The tool setup device includes a magazine capable of holding a plurality of tool holders, a driver that drives the magazine, and a controller that controls driving of the driver. The controller executes a process of driving the first tool holder to a predetermined setup position when the first tool is designated as a tool to be setup, and a process of driving the second tool holder to the predetermined setup position when the second tool is designated as a tool to be setup.

In one example of the present disclosure, a tool to be setup is provided with a reading code for uniquely identifying the tool. The tool setup device further includes a reading device for reading the reading code. The controller executes a process of determining whether the tool to be setup is attachable to the tool holder driven to the predetermined setup position on the basis of a reading result of the reading code by the reading device, and a process of outputting an alert when it is determined that the tool to be setup is not attachable to the tool holder driven to the predetermined setup position.

In one example of the present disclosure, the tool transport system further includes a transport path. The tool storage portion is disposed in parallel with the transport path. The transport device moves on the transport path.

In one example of the present disclosure, the common connection mechanism has a first groove part disposed on a first surface of the tool holder, a second groove part disposed in parallel with the first groove part on the first surface, a third groove part disposed on a second surface of the tool holder, and a fourth groove part disposed in parallel with the second groove part on the second surface. The first surface and the second surface face each other. The common holding mechanism has a first guide part that fits with the first groove part, a second guide part that fits with the second groove part, a third guide part that fits with the third groove part, and a fourth guide part that fits with the fourth groove part.

In one example of the present disclosure, the tool storage portion is configured by combining a set of a first plate member and a second plate member. The first plate member and the second member are disposed to face each other. The first guide part and the third guide part are formed on the first plate member. The second guide part and the fourth guide part are formed on the second plate member.

In other example of the present disclosure, there is provided a control method for a tool transport system. The tool transport system includes a plurality of machine tools, and a tool storage portion having a plurality of holding parts. Each of the plurality of holding parts has a common holding mechanism capable of holding any of a plurality of tool holders. The tool transport system further includes a transport device that transports a designated tool holder of the plurality of tool holders stored in the tool storage portion to a designated machine tool of the plurality of machine tools. A first tool holder of the plurality of tool holders has a common connection mechanism that is connectable to the common holding mechanism, and a first attachment mechanism to which a first tool to be used in the first machine tool of the plurality of machine tools is attachable. A second tool holder of the plurality of tool holders has the common connection mechanism, and a second attachment mechanism to which a second tool to be used in the second machine tool of the plurality of machine tools is attachable. The tool transport system further includes a tool setup device that exchanges a tool holder with the transport device. The tool setup device includes a magazine capable of holding a plurality of tool holders, and a driver that drives the magazine. The control method includes driving the first tool holder to a predetermined setup position when the first tool is designated as a tool to be setup, and driving the second tool holder to the predetermined setup position when the second tool is designated as a tool to be setup.

In other example of the present disclosure, there is provided a control program for a tool transport system. The tool transport system includes a plurality of machine tools, and a tool storage portion having a plurality of holding parts. Each of the plurality of holding parts has a common holding mechanism capable of holding any of a plurality of tool holders. The tool transport system further includes a transport device that transports a designated tool holder of the plurality of tool holders stored in the tool storage portion to a designated machine tool of the plurality of machine tools. A first tool holder of the plurality of tool holders has a common connection mechanism that is connectable to the common holding mechanism, and a first attachment mechanism to which a first tool to be used in the first machine tool of the plurality of machine tools is attachable. A second tool holder of the plurality of tool holders has the common connection mechanism, and a second attachment mechanism to which a second tool to be used in the second machine tool of the plurality of machine tools is attachable. The tool transport system further includes a tool setup device that exchanges a tool holder with the transport device. The tool setup device includes a magazine capable of holding a plurality of tool holders, and a driver that drives the magazine. The control program causes the tool transport system to execute driving the first tool holder to a predetermined setup position when the first tool is designated as a tool to be setup, and driving the second tool holder to the predetermined setup position when the second tool is designated as a tool to be setup.

The foregoing and other objects, features, aspects and advantages of the present disclosure will become more apparent from the following detailed description of the present disclosure when taken in conjunction with the accompanying drawings.

### BRIEF DESCRIPTION OF DRAWINGS

Fig. 1 is a view showing an appearance of a tool transport system.
Fig. 2 is a diagram showing a configuration example of a driving mechanism of the tool transport system.
Fig. 3 is a view showing a pair of plate members which is part of a tool storage portion.
Fig. 4 is a view showing one pate member constituting the pair of plate members.
Fig. 5 is a view showing a tool holder stored in the tool storage portion.
Fig. 6 is a view for illustrating one example of storage structure of a tool holder.
Fig. 7 is a view for illustrating other example of storage structure of a tool holder.
Fig. 8 is a view showing one example of an internal configuration of a tool setup device.
Fig. 9 is a perspective view showing the tool setup device viewed from one lateral face.
Fig. 10 is a perspective view showing the tool setup device viewed from the other lateral face.
Fig. 11 is a view schematically showing a flow of a tool holder carrying-in step from the tool setup device to the tool storage portion.
Fig. 12 is a chart schematically showing one example of data structure of magazine information.
Fig. 13 is a chart showing one example of data structure of tool information.
Fig. 14 is a chart showing one example of data structure of storage information.
Fig. 15 is a view schematically showing a flow of a tool transporting step from the tool storage portion to a machine tool.
Fig. 16 is a view schematically showing a flow of a tool carrying-out step from the tool storage portion to the tool setup device.
Fig. 17 is a diagram showing one example of hardware configuration of a management device.
Fig. 18 is a block diagram showing principal hardware configuration of PLC (Programmable Logic Controller).
Fig. 19 is a diagram showing one example of hardware configuration of an operation terminal.

### DESCRIPTION OF EMBODIMENTS

Hereinafter, each embodiment according to the present invention will be described by referring to the drawings. In the following description, the same parts and constituents are denoted by the same reference numeral. The names and functions of these are also the same. Therefore, detailed description is not repeated for these. Each embodiment and each modified example described below may be appropriately and selectively combined.

### <A. Appearance of tool transport system 10>

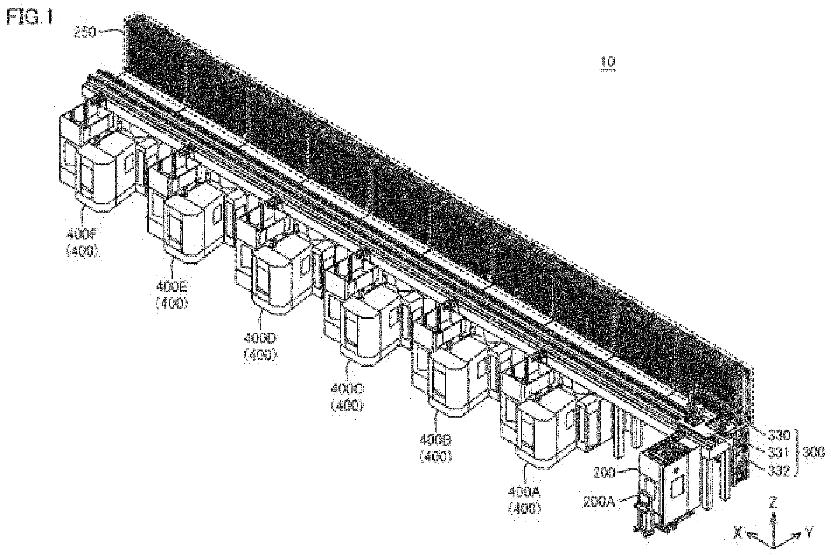

Referring to Fig. 1, a tool transport system 10 is described. Fig. 1 is a view showing an appearance of tool transport system 10.

As shown in Fig. 1, tool transport system 10 includes a tool setup device 200, a tool storage portion 250, a transport device 300, and a machine tool 400.

The "transport device" referred in the present description is a concept including various devices having the function of transporting an object to be transported such as a workpiece or a tool. Hereinafter, description is made for a four to seven-axis driven multi joint robot as one example of transport device 300, however, transport device 300 is not limited to the multi joint robot. As one example, transport device 300 may be a two to three-axis driven orthogonal robot (autoloader).

Also, "machine tool" referred in the present description is concept including various devices having the function of machining a workpiece. Machine tool 400 may be a horizontal type machining center, and may be a vertical type machining center. Alternatively, machine tool 400 may be a lathe, may be an additive machine tool, and may be other cutting tool or a grinding tool.

Hereinafter, for convenience of description, the direction corresponding to the moving direction of transport device 300 is defined as "X direction". X direction is one direction of horizontal direction. The direction orthogonal to the X direction is defined as "Y direction". Y direction is one direction of horizontal direction. Also, the direction orthogonal to both of X direction and Y direction is defined as "Z direction". "Z direction" is a vertical direction (gravity direction).

Tool setup device 200 is one of transport destinations for tool by transport device 300. Tool setup device 200 includes an operation terminal 200A. Operation terminal 200A receives various operations to tool transport system 10.

Tool storage portion 250 is one of transport destinations for tool by transport device 300. A plurality of tools can be stored in tool storage portion 250. Typically, tool storage portion 250 is disposed in parallel with rail 331.

Transport device 300 includes an arm robot 330, a rail 331 (transport path), and a carriage 332. Arm robot 330 is fixed on carriage 332. Carriage 332 is capable of moving on rail 331. Tool storage portion 250 and machine tool 400 are arranged in parallel with each other along rail 331 to sandwich rail 331 therebetween. Transport device 300 transports a tool between tool setup device 200 and tool storage portion 250, and transports a tool between tool storage portion 250 and machine tool 400.

Machine tool 400 is one of transport destinations for tool by transport device 300. While Fig. 1 shows six machine tools 400A to 400F as machine tool 400, the number of machine tool 400 provided in tool transport system 10 may be two or more. Machine tool 400 machines a workpiece using a designated tool in accordance with a machining program designed in advance.

### <B. Driving mechanism of tool transport system 10>

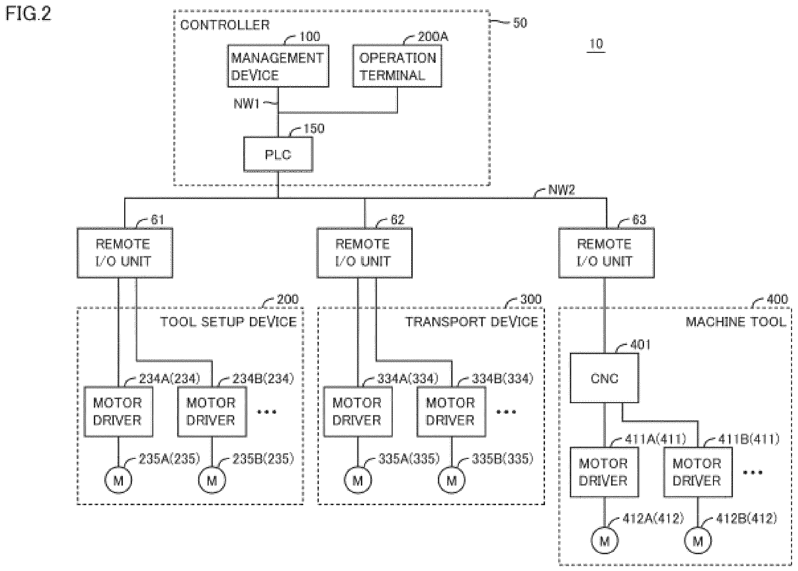

Next, referring to Fig. 2, various driving mechanisms in tool transport system 10 are described. Fig. 2 is a diagram showing a configuration example of a driving mechanism of tool transport system 10.

As shown in Fig. 2, tool transport system 10 includes a controller 50, remote I/O (Input/Output) units 61 to 63, tool setup device 200, transport device 300, and machine tool 400.

"Controller 50" referred in the present description means a device that controls tool transport system 10. A device configuration of controller 50 may be appropriately selected. Controller 50 may be configured by a single control unit and may be configured by a plurality of control units. In the example of Fig. 2, controller 50 is configured by a management device 100, a PLC 150, and operation terminal 200A described above.

Management device 100 is a main computer that manages tool transport system 10. PLC 150 controls various industrial devices for automating a machining process. Operation terminal 200A is a terminal for receiving various operations regarding carry-out and carry-in of tool.

Management device 100, PLC 150, and operation terminal 200A are connected to a network NW 1. Management device 100, PLC 150, and operation terminal 200A may be communication connected by wire and may be communication connected wirelessly. For Network NW1, EtherNET (registered trademark) or the like is employed. Management device 100 and operation terminal 200A send a control command to PLC 150 via network NW1. According to the control command, a tool to be transported, a transport destination of the tool, start/stop of transport of the tool and the like are designated.

Remote I/O units 61 to 63 and PLC 150 are connected to network NW2. As network NW2, it is preferred to employ a field network that conducts fixed-cycle communication with which data arrival time is ensured. As such a field network that conducts fixed-cycle communication, for example, EtherCAT (registered trademark), EtherNet/IP (registered trademark), CC-Link (registered trademark), or CompoNet (registered trademark) is employed.

Tool setup device 200 includes one or more motor driver 234, and one or more motor 235. In the example of Fig. 2, two motor drivers 234A, 234B and two motors 235A, 235B are shown.

Inside tool setup device 200 or in the vicinity of tool setup device 200, remote I/O unit 61 is disposed. Remote I/O unit 61 mediates data exchange between various driving units (for example, motor driver 234) inside tool setup device 200, and PLC 150. As one example, motor driver 234 receives a control command at a fixed cycle from PLC 150 via remote I/O unit 61, and controls driving of motor 235 according to the control command.

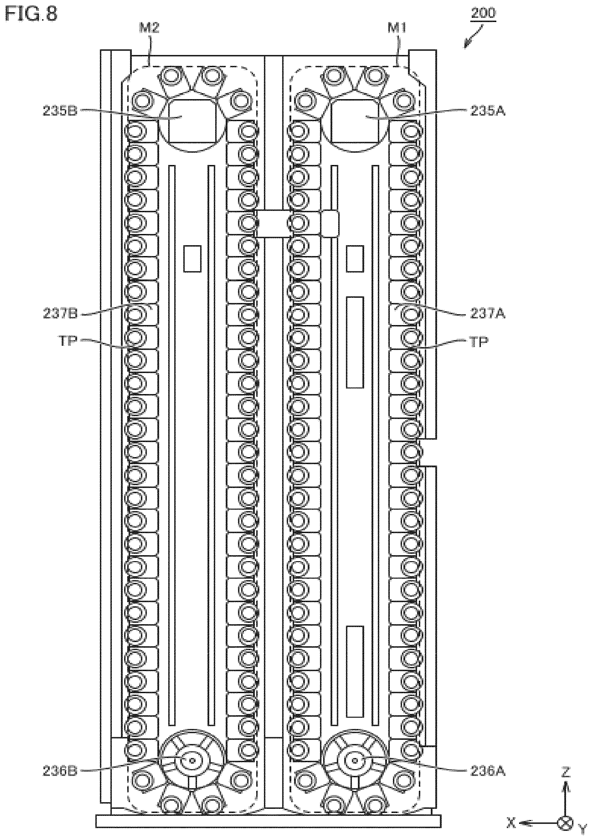

Motor 235A controls, for example, driving of a later-described magazine M1 (see Fig. 8). Motor 235B controls, for example, driving of a later-described magazine M2 (see Fig. 8).

Motor driver 234 may be, for example, a driver for servo motor, and may be a driver for stepping motor. Motor 235 may be a servo motor, and may be a stepping motor.

Transport device 300 includes one or more motor driver 334, and one or more motor 335. In the example of Fig. 2, two motor drivers 334A, 334B and two motors 335A, 335B are shown.

Inside transport device 300 or in the vicinity of transport device 300, remote I/O unit 62 is disposed. Remote I/O unit 62 mediates data exchange between various driving units (for example, motor driver 334) inside transport device 300, and PLC 150. As one example, motor driver 334 receives a control command at a fixed cycle from PLC 150 via remote I/O unit 62, and controls driving of motor 335 according to the control command.

Motor 335A controls, for example, driving of carriage 332 (see Fig. 1) described above. Motor 335B controls, for example, driving of arm robot 330 (see Fig. 1). Motor 335B is provided in accordance with the number of joints of arm robot 330.

Motor driver 334 may be, for example, a driver for servo motor, and may be a driver for stepping motor. Motor 335 may be a servo motor, and may be a stepping motor.

Machine tool 400 includes a CNC (Computer Numerical Control) 401, one or more motor driver 411, and one or more motor 412. In the example of Fig. 2, two motor drivers 411A, 411B and two motors 412A, 412B are shown.

Inside machine tool 400 or in the vicinity of machine tool 400, remote I/O unit 62 is disposed. Remote I/O unit 62 mediates data exchange between various driving units (for example, CNC 401) inside machine tool 400, and PLC 150. Likewise motor driver 334, motor driver 411 receives a control command at a fixed cycle from PLC 150 via remote I/O unit 62, and controls driving of motor 412 according to the control command.

Motor 412A drives, for example, a main shaft capable of attachment of a tool in the axial direction of the main shaft. Motor 412B rotationally drives, for example, a main shaft in the rotary direction about the axial direction of the main shaft.

Motor driver 411 may be, for example, a driver for servo motor, and may be a driver for stepping motor. Motor 412 may be a servo motor, and may be a stepping motor.

### <C. Tool storage portion 250>

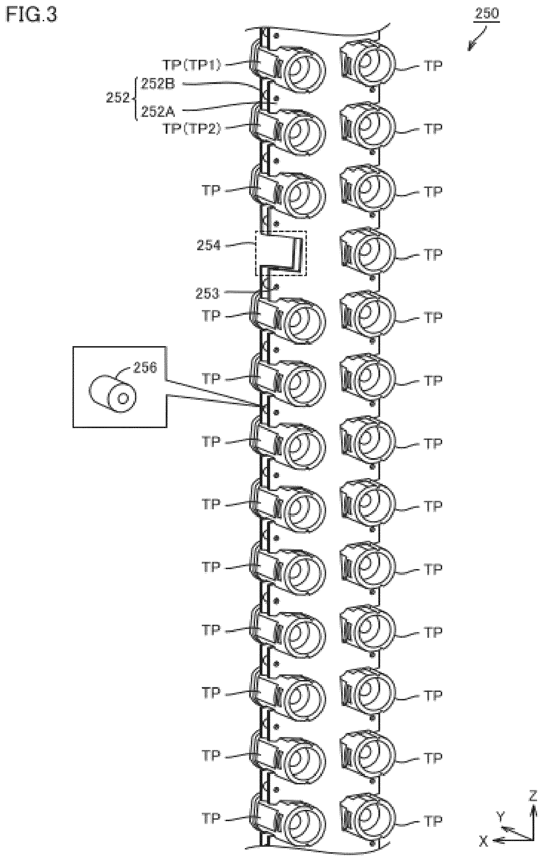

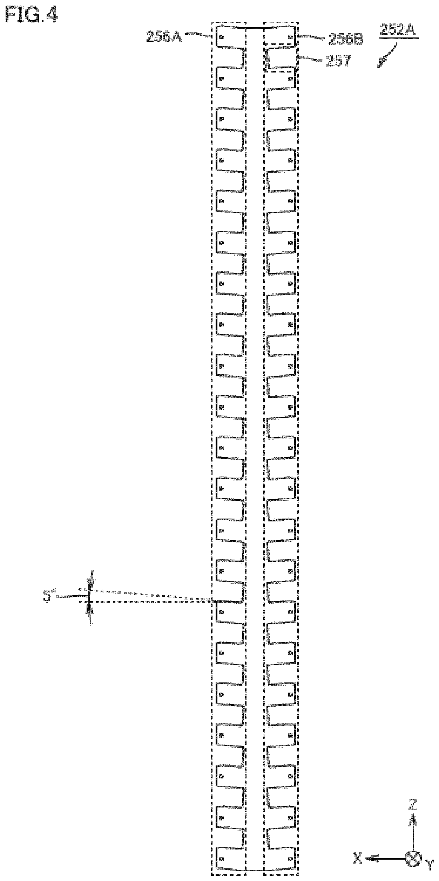

Next, referring to Fig. 3 to Fig. 6, tool storage portion 250 is described. Fig. 3 is a view showing a plate member pair 252 which is part of tool storage portion 250. Fig. 4 is a view showing one pate member 252A constituting plate member pair 252.

Tool storage portion 250 is configured by arranging in the X direction a plurality of plate member pairs 252 extending in the Z direction. One plate member pair 252 is composed of, for example, two plate members 252A, 252B.

Plate member 252A and plate member 252B are formed of metal such as iron. Each of plate member 252A and plate member 252B has a plurality of screw holes 253, and screwed with a plurality collars 256 interposed therebetween. Thus, plate member 252A and plate member 252B are fixed so that they are facing each other and parallel with each other.

Tool storage portion 250 has a plurality of holding parts 254. Each of holding parts 254 has a common holding mechanism capable of holding any of tool holders TP.

As one example, by forming a plurality of notches on one metal plate, a notch group 256A and a notch group 256B are formed on plate member 252A. Notch group 256A has a plurality of rectangular notches 257 at regular intervals in the Z direction. Similarly, notch group 256B has a plurality of rectangular notches 257 at regular intervals in the Z direction. Each rectangular notch 257 has a predetermined angle (for example, 5°) from the horizontal direction (X-axial direction) when tool storage portion 250 is installed.

Plate member 252B has the same structure as plate member 252A. Plate member 252A and plate member 252B are arranged such that each notch 257 of plate member 252A is facing each notch 257 of plate member 252B in the Y direction. Two notches 257 facing each other in the Y direction form one holding part 254. Typically, one holding part 254 holds one tool holder TP.

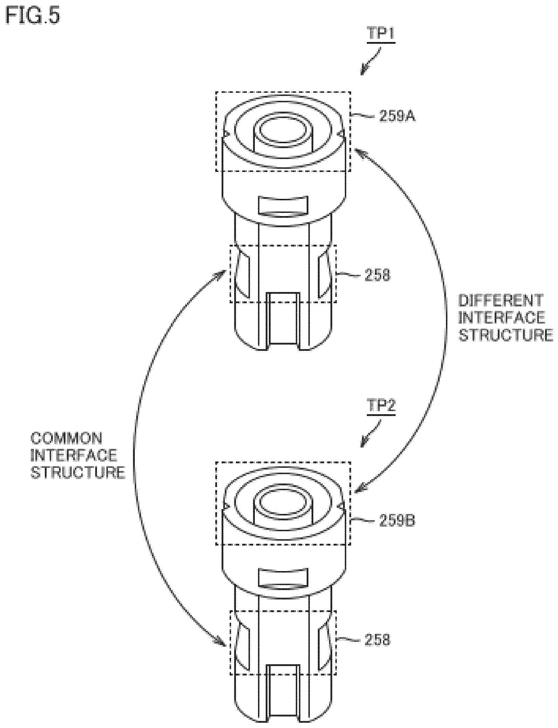

Next, referring to Fig. 5, tool holder TP is described. Fig. 5 is a view showing tool holders TP1, TP2 stored in tool storage portion 250.

Tool holder TP1 (first tool holder) has a connection mechanism 258 with tool storage portion 250, and a tool attachment mechanism 259A. Connection mechanism 258 is connectable with holding part 254 of tool storage portion 250. Attachment mechanism 259A functions as a socket in which a shank part of a tool conforming to a first tool standard is to be inserted. That is, attachment mechanism 259A enables attachment of a tool to be used in machine tool 400A (first machine tool) conforming to the first tool standard. Examples of the first tool standard include NT, BT, BBT, HSK, and CAPTO.

Tool holder TP2 (second tool holder) has connection mechanism 258 with tool storage portion 250, and a tool attachment mechanism 259B. Connection mechanism 258 is connectable with holding part 254 of tool storage portion 250. The shape of connection mechanism 258 of tool holder TP2 is the same as the shape of connection mechanism 258 of tool holder TP1. Attachment mechanism 259A functions as a socket of a tool conforming to a second tool standard. That is, attachment mechanism 259B enables attachment of a tool to be used in machine tool 400B (second machine tool) conforming to the second tool standard. The second tool standard is a tool standard that is different from the first tool standard. Examples of the second tool standard include NT, BT, BBT, HSK, and CAPTO.

Thus, tool holders TP1, TP2 have common connection mechanism 258, and attachment mechanisms 259A, 259B complying with different tool standards. Since tool holders TP1, TP2 are stored in holding part 254 of tool storage portion 250 via common connection mechanism 258, it is no longer necessary to provide tool storage portion 250 for each tool standard. As a result, configuration of tool storage portion 250 is simplified, and the number of assembling steps of tool transport system 10 is reduced. Since tool holders TP1, TP2 can be stored in any place of tool storage portion 250, it becomes possible to utilize the storage space of tool storage portion 250 adequately.

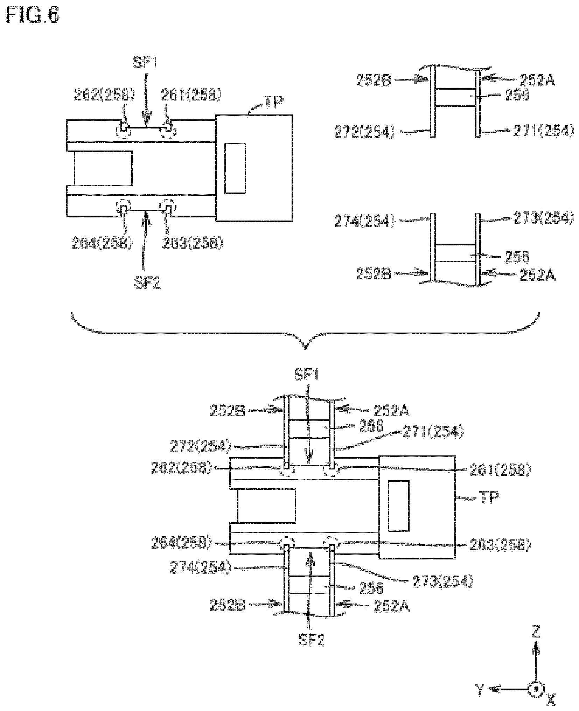

Next, referring to Fig. 6, a storage mode of tool holder TP into tool storage portion 250 is further described. Fig. 6 is a view for illustrating one example of storage structure of tool holder TP. Fig. 6 shows the appearance that tool holder TP is stored in tool storage portion 250 viewed from the X direction.

First, one example of connection mechanism 258 of tool holder TP is described. Connection mechanism 258 is configured, for example, by groove parts 261 to 264. Groove part 261 (first groove part), and groove part 262 (second groove part) are disposed on one surface SF1 of tool holder TP. Groove part 263 (third groove part) and groove part 264 (fourth groove) are disposed on the other surface SF2 of tool holder TP. Surface SF2 is a surface facing (parallel to) surface SF1. Surfaces SF1, SF2 may be any surfaces of tool holders TP as long as they are surfaces facing each other.

Next, one example of holding structure in holding part 254 of tool storage portion 250 is described. A holding mechanism in holding part 254 is configured, for example, by guide parts 271 to 274. Guide part 271 (first guide part) fits with groove part 261. Guide part 272 (second guide part) fits with groove part 262. Guide part 273 (third guide part) fits with groove part 263. Guide part 274 (fourth guide part) fits with groove part 264. Guide parts 271 to 274 slide on groove parts 261 to 264. Guide parts 271 to 274 are respectively fit with groove parts 261 to 264, and thus tool holder TP is stored in tool storage portion 250.

Guide part 271 and guide part 273 are formed on one plate member 252A of plate member pair 252. On the other hand, guide part 272 and guide part 274 are formed on the other plate member 252B of plate member pair 252. In this manner, two plate member 252A and plate member 252B are combined to form holding part 254 of tool storage portion 250.

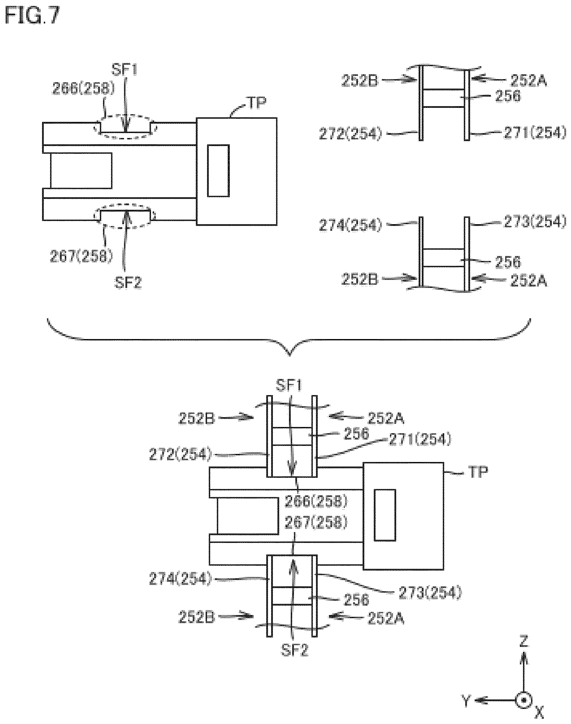

Next, referring to Fig. 7, other example of storage mode of tool holder TP into tool storage portion 250 is described. Fig. 7 is a view for illustrating other example of storage structure of tool holder TP.

In the example of Fig. 6, four groove parts 261 to 264 that fit with guide parts 271 to 274 were formed in tool holder TP. In contrast, in the example Fig. 7, tool holder TP has two groove parts 266, 267 having larger groove widths than groove parts 261 to 264.

Groove part 266 is disposed on one surface SF1 of tool holder TP. Groove part 267 is disposed on the other surface SF2 of tool holder TP. The holding structure of holding part 254 shown in Fig. 7 is the same as the holding structure of holding part 254 shown in Fig. 6 described above.

In the state that tool holder TP is held by holding part 254, one lateral face of groove part 266 is in contact with guide part 271 of holding part 254, and the other lateral face of groove part 266 is in contact with guide part 272 of holding part 254. Similarly, in the state that tool holder TP is held by holding part 254, one lateral face of groove part 267 is in contact with guide part 273 of holding part 254, and the other lateral face of groove part 267 is in contact with guide part 274 of holding part 254. Also, guide parts 273, 274 of holding part 254 support tool holder TP1. Thus, too holder TP is held by holding part 254.

### <D. Internal configuration of tool setup device 200>

Next, referring to Fig. 8, an internal configuration of tool setup device 200 is described. Fig. 8 is a view showing one example of internal configuration of tool setup device 200.

As shown in Fig. 8, tool setup device 200 includes magazines M1, M2 capable of holding a plurality of tool holders TP.

Magazine M1 is stretched over motor 235A and roller 236A. By driving of motor 235A, magazine M1 rotates clockwise or counter-clockwise. Also, magazine M1 has a plurality of pot holders 237A. Each of pot holders 237A is capable of holding tool holder TP.

Magazine M2 is stretched over motor 235B and roller 236B. By driving of motor 235B, magazine M2 rotates clockwise or counter-clockwise. Also, magazine M2 has a plurality of pot holders 237B. Each of pot holders 237B is capable of holding tool holder TP.

Tool setup device 200 is responsible for tool carrying-in and tool carrying-out. "Tool carrying-in" means transporting a tool or a tool holder to tool storage portion 250 or machine tool 400 from tool setup device 200. "Tool carrying-out" means transporting a tool or tool holder from tool storage portion 250 or machine tool 400 to tool setup device 200.

As a procedure of tool carrying-in, first, an operator sets a tool to be carried-in in tool holder TP held by magazine M1. Alternatively, an operator may set tool holder TP to which a tool to be carried-in is attached in magazine M1. Upon completion of the setting of tool, the operator performs completion operation on operation terminal 200A described above. Based on this, controller 50 drives magazine M1 and drives tool holder TP to be carried-in to a predetermined tool change position. Thereafter, transport device 300 detaches tool holder TP to be carried-in from magazine M1, and carries the tool into tool storage portion 250.

As a procedure of tool carrying-out, an operator designates a tool to be carried-out on operation terminal 200A described above. Based on this, transport device 300 acquires tool holder TP to be carried-out from tool storage portion 250 or machine tool 400. Next, controller 50 drives a vacant pot holding part 237B to a predetermined tool change position by driving magazine M2, and sets tool holder TP to be carried-out in the vacant pot holding part 237B. Thereafter, controller 50 drives magazine M2, and drives tool holder TP to be carried-out to an exit. Thereafter, an operator takes tool holder TP or the tool to be carried-out out of magazine M2.

### <E. Appearance of tool setup device 200>

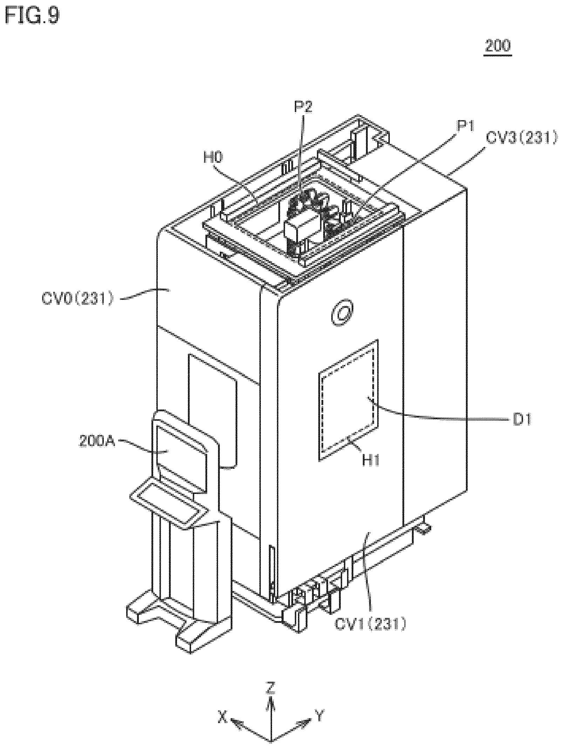

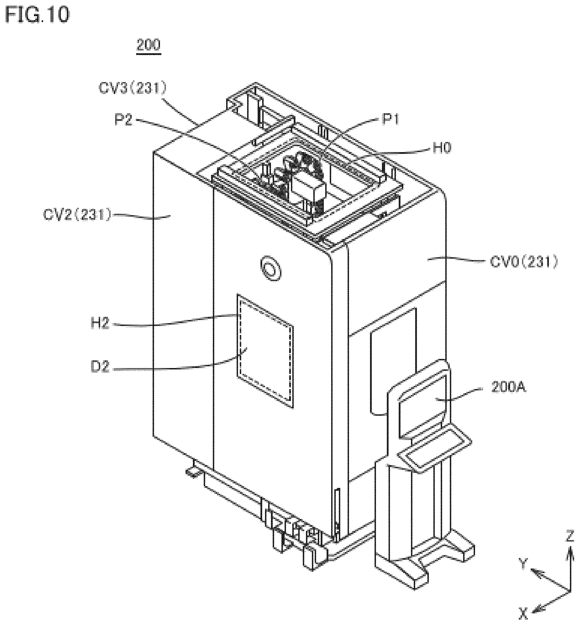

Next, referring to Fig. 9 and Fig. 10, appearance of tool setup device 200 is described. Fig. 9 is a perspective view showing tool setup device 200 viewed from one lateral face. Fig. 10 is a perspective view showing tool setup device 200 viewed from the other lateral face.

Tool setup device 200 has a cover body 231. Cover body 231 accommodates, for example, magazines M1, M2, and motors 235A, 235B (see Fig. 8) described above.

Cover body 231 includes a front cover CV0, a side cover CV1, a side cover CV2, and a rear cover CV3. On the top surface of the cover body 231, an opening H0 for passing tool holder TP to be carried-in or carried-out is formed.

Referring to Fig. 9, opening H1 is formed on side cover CV1. A door D1 is disposed to cover opening H1. Door D1 is, for example, a sliding door. By opening or closing of door D1, the state of door D1 is brought into an open state where opening H1 is not covered with door D1, or brought into a closed state where opening H1 is covered with door D1. Door D1 may be manually driven, and may be automatically driven by a motor (not shown) or the like.

Door D1 is provided for an operator to set tool holder TP to be carried-in in magazine M1. That is, when door D1 comes into the open state, the operator can set tool holder TP to be carried-in in magazine M1 through opening H1 as an entrance.

Referring to Fig. 10, on side cover CV2 facing side cover CV1, an opening H2 is formed. A door D2 is disposed to cover opening H2. Door D2 is, for example, a sliding door. By opening or closing of door D2, the state of door D2 is brought into an open state where opening H2 is not covered with door D2, or brought into a closed state where opening H2 is covered with door D2. Door D2 may be manually driven, and may be automatically driven by a motor (not shown) or the like.

Door D2 is provided for an operator to take tool holder TP to be carried-out out of magazine M2. That is, when door D2 comes into the open state, the operator can collect tool holder TP to be carried-out from magazine M2 through opening H2 as an exit.

### <F. Tool carrying-in step into tool storage portion 250>

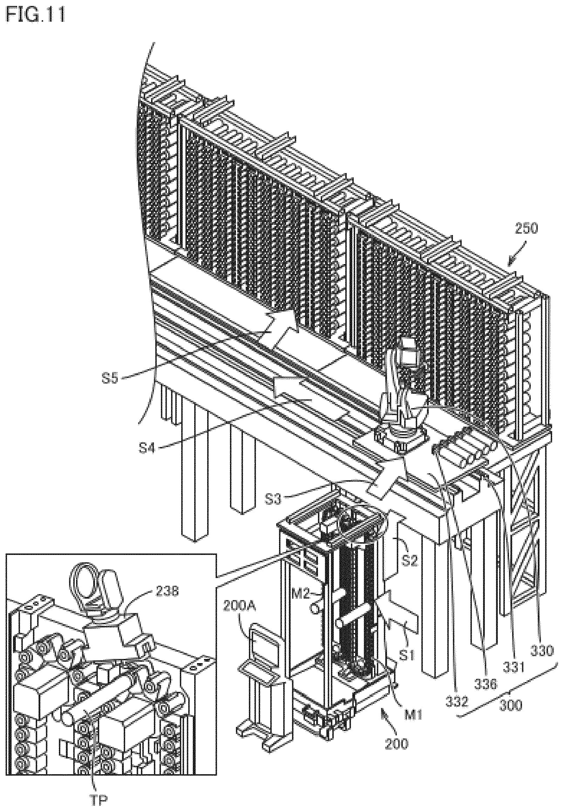

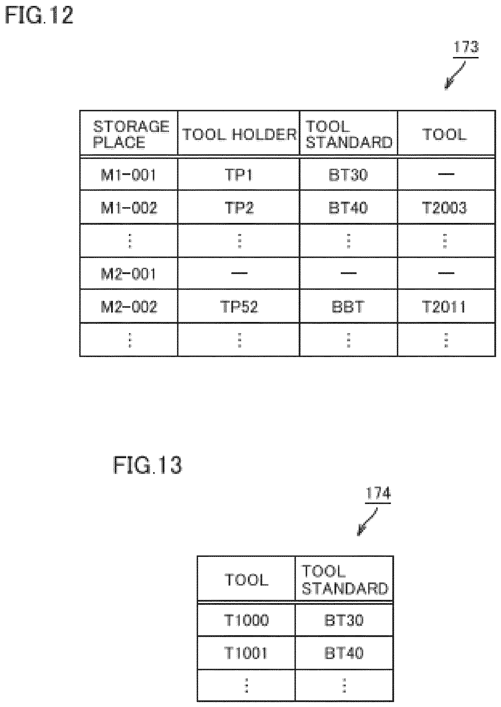

Next, referring to Fig. 11 and Fig. 12, a carrying-in step of tool holder TP is described. Fig. 11 is a view schematically showing a flow of a tool holder TP carrying-in step from tool setup device 200 to tool storage portion 250.

In step S1, it is assumed that an operator designates a tool to be setup on operation terminal 200A. Based on this, controller 50 drives a tool holder that meets the standard of the tool designated as an object to be setup, to a predefined setup position. The setup position is, for example, in front of door D1 of tool setup device 200 (see Fig. 9). The setup position may be defined on a program, and may be defined in a setting file.

Controller 50 drives the first tool holder that meets the standard of the first tool to a predetermined setup position when the first tool is designated as a tool to be setup. On the other hand, controller 50 drives a vacant tool holder that meets the standard of the second tool to the predetermined setup position when the second tool is designated as a tool to be setup.

The tool holder driven to the setup position is discriminated on the basis of, for example, magazine information 173 shown in Fig. 12, and tool information 174 shown in Fig. 13. Fig. 12 is a chart schematically showing one example of data structure of magazine information 173. Fig. 13 is a view showing one example of data structure of tool information 174.

In magazine information 173, each storage place in magazines M1, M2, a tool holder to be stored in the storage place, a tool standard that can be held by the tool holder, and identification information of the tool to be held by the tool holder are correlated. Identification information of a tool defined in magazine information 173 may be indicated by a tool number such as ID (Identification) and may be indicated by a tool name. In the example Fig. 12, a vacant storage place in which no tool holder or tool is stored is indicated by "-".

In tool information 174, identification information of tool and tool standard are correlated. Identification information of tool defined in tool information 174 may be indicated by a tool number such as ID, and may be indicated by a tool name.

Controller 50 identifies the tool standard for the tool designated as an object to be setup by referring to tool information 174. Next, controller 50 determines vacant tool holder TP that meets the identified tool standard by referring to magazine information 173. Next, controller 50 drives the determined vacant tool holder TP to the predetermined setup position.

Thereafter, the operator opens door D1 of tool setup device 200 (see Fig. 9), and sets the tool to be setup in vacant tool holder TP. At this time, controller 50 determines whether the tool to be set by the operator complies with the standard of tool holder TP.

As one example, tool setup device 200 includes a reading device (not shown) for reading a reading code given to a tool. The reading code is a code containing identification information of tool, and is, for example, a barcode or a QR code (registered tradename). The reading device is, for example, a two-dimensional barcode reader or a QR code reader. The reading device is provided, for example, near door D1, and reads a reading code given to a tool.

Controller 50 determines whether the tool to be setup is attachable to tool holder TP that is driven to the predetermined setup position on the basis of the reading result by the reading device. More specifically, controller 50 identifies the tool standard corresponding to the identification information of tool read from the reading code by referring to tool information 174. Thereafter, controller 50 determines whether the identified tool standard coincides with the tool standard of tool holder TP driven to the setup position.

When the identified tool standard coincides with the tool standard of tool holder TP driven to the setup position, controller 50 determines that the tool to be setup is attachable to the tool holder TP. If it is not so, controller 50 determines that the tool to be setup is not attachable to the tool holder TP and outputs a predetermined alert. As one example, the alert may be displayed on the display of operation terminal 200A, may be audibly output, and may be output in data of report format.

Upon completion of setup of tool for tool holder TP driven to the setup position, the operator conducts a completion operation on operation terminal 200A.

Referring again to Fig. 11, in step S2, controller 50 controls motor 235A (see Fig. 8) and drives magazine M1. Thus, controller 50 moves tool holder TP to be carried-in to a predetermined tool change position. Near the tool change position, ATC (Automatic Train Control) 238 is provided. ATC 238 detaches tool holder TP at the tool change position from magazine M1 and makes a half turn.

Next, in step S3, arm robot 330 detaches tool holder TP from ATC 238, and places the tool holder TP on a temporary placing area 336 on carriage 332. When there is other tool holder to be carried-in, the process of steps S1 to S3 is repeated unless the maximum number of storage of temporary placing area 336 is not exceeded.

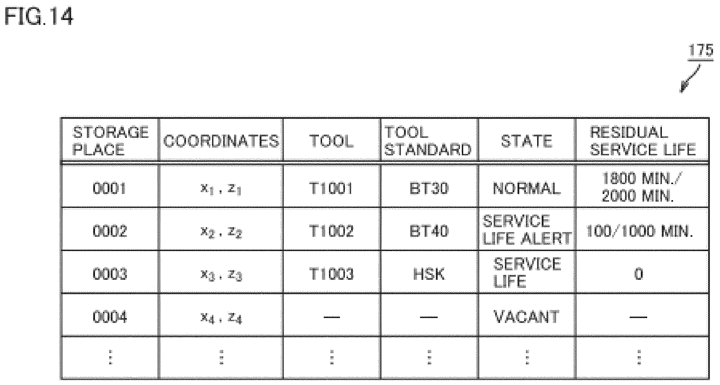

Next, in step S4, controller 50 controls motor 335A (see Fig. 2), and drives carriage 332. Thus, controller 50 moves carriage 332 to a designated tool carrying-in position. The tool carrying-in position is determined, for example, on the basis of storage information 175 shown in Fig. 14.

Fig. 14 is a chart showing one example of data structure of storage information 175. In storage information 175, each storage place in tool storage portion 250, coordinate values of the storage place, identification information of a tool stored in the storage place, a standard of the tool, a storage state of the tool in the storage place, and a residual service life of the tool stored in the storage place are correlated.

The storage place defined in storage information 175 may be indicated by a number such as ID, and may be indicated by a storage place name. Coordinate values of storage place defined in storage information 175 may be defined two-dimensionally, and may be defined three-dimensionally. In the example of Fig. 14, the coordinate values are indicated by a coordinate value "x" in the direction parallel with rail 331, and a coordinate value "z" in the vertical direction. Identification information of tool defined in storage information 175 may be indicated by a tool number such as ID, and may be indicated by a tool name. A storage state defined in storage information 175 indicates, for example, whether the storage place is vacant or not, or whether the tool stored in the storage place is normal or not. A residual service life of tool defined in storage information 175 may be indicated by a current total use time to a maximum usable time of the tool, and may be indicated by a current total number of use times to a maximum usable times of the tool.

Controller 50 determines a storage destination of tool holder TP by referring to a vacant storage place defined in storage information 175. When there are a plurality of vacant storage places, controller 50 may determine one storage place randomly from the plurality of vacant storage places as a storage destination, and may determine one storage place located closer to transport device 300 from the plurality of vacant storage places as a storage destination.

Referring again to Fig. 11, in step S5, arm robot 330 detaches tool holder TP to be carried-in from temporary placing area 336, and stores tool holder TP in the determined storage destination. Thereafter, controller 50 writes the storage place of tool holder TP, and information about the tool held by tool holder TP into storage information 175.

When other tool to be carried-in is left on temporary placing area 336, controller 50 repeats the process of steps S4, S5 until there is no tool left on temporary placing area 336.

### <G. Tool transporting step to machine tool 400>

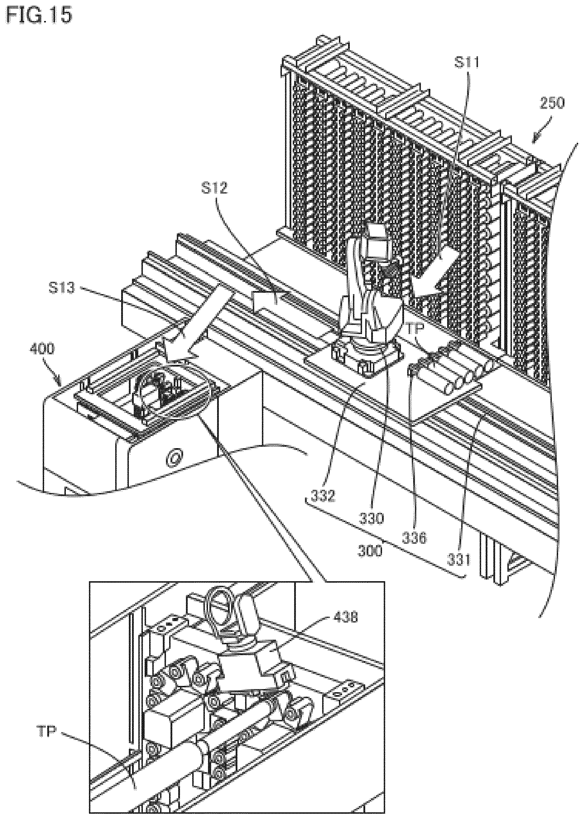

Next, referring to Fig. 15, a tool transporting step following Fig. 11 is described. Fig. 15 is a view schematically showing a flow of a tool transporting step from tool storage portion 250 to machine tool 400.

The case that controller 50 receives a transport command of a tool to machine tool 400 is assumed. Tool to be transported, and machine tool 400 that is a transport destination are designated, for example, on operation terminal 200A by an operator. Based on reception of a tool transport command, controller 50 determines a storage destination of the tool from storage information 175 (see Fig. 14) described above. Thereafter, controller 50 drives carriage 332 by controlling motor 335A (see Fig. 2), and moves carriage 332 to the front of the storage destination of the tool to be transported.

Next, in step S11, arm robot 330 takes tool holder TP that holds a tool to be transported out of tool storage portion 250, and places tool holder TP on temporary placing area 336 on carriage 332.

Next, in step S12, controller 50 drives carriage 332 by controlling motor 335A (see Fig. 2), and moves carriage 332 to the front of machine tool 400 that is a transport destination.

Next, in step S13, arm robot 330 passes tool holder TP to ATC 438 provided in machine tool 400 that is a transport destination. Thereafter, ATC 438 attaches tool holder TP received from arm robot 330 to ATC 438 (see Fig. 15) in machine tool 400. Thereafter, ATC 438 sets tool holder TP in magazine in machine tool 400. Thus, the tool becomes ready to use in machine tool 400.

### <H. Tool carrying-out step to tool setup device 200>

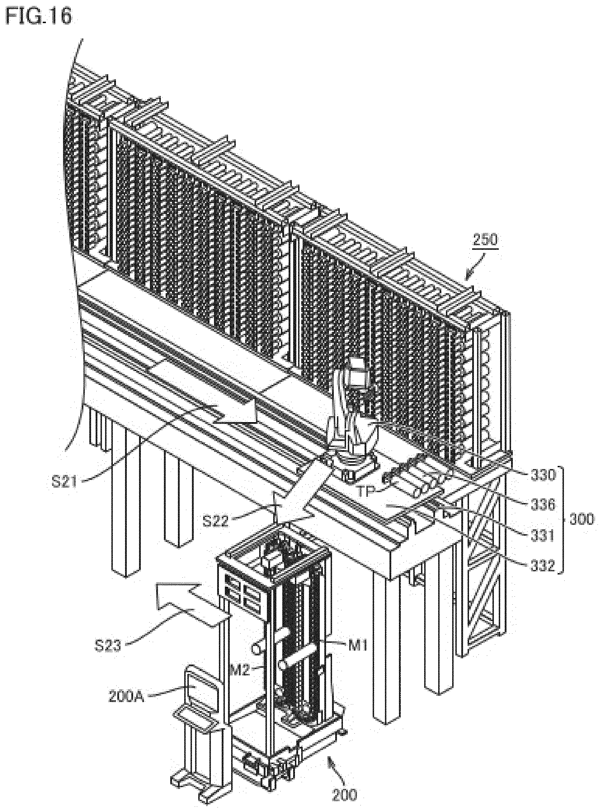

Next, referring to Fig. 16, a tool carrying-out step is described. Fig. 16 is a view schematically showing a flow of a tool carrying-out step from tool storage portion 250 to tool setup device 200.

The case that controller 50 receives a transport command of a tool to tool setup device 200 is assumed. Based on this, controller 50 determines a storage destination of the tool according to storage information 175 (see Fig. 14) described above. Thereafter, controller 50 drives carriage 332 by controlling motor 335A (see Fig. 2) described above, and moves carriage 332 to the front of the storage destination of the tool. Next, arm robot 330 takes tool holder TP out of tool storage portion 250, and places tool holder TP on temporary placing area 336 on carriage 332. Also, controller 50 deletes identification information of the tool from storage information 175 (see Fig. 14) described above, and rewrites the storage source of the tool to a vacant state.

Next, in step S21, controller 50 drives carriage 332 by controlling motor 335A described above, and moves carriage 332 to the front of tool setup device 200.

Next, in step S22, arm robot 330 detaches tool holder TP to be carried-out from temporary placing area 336, and attaches tool holder TP to ATC238 (see Fig. 11) provided in tool setup device 200. Thereafter, ATC 238 attaches tool holder TP to magazine M2 of tool setup device 200.

Next, in step S23, controller 50 drives magazine M2 for carrying-out by controlling motor 235B (see Fig. 8) described above, and moves tool holder TP to be carried-out to the front of door D2 (see Fig. 10). Thereafter, the operator opens door D2 and takes the tool to be carried-out out of tool setup device 200.

### <I. Hardware configuration of management device 100>

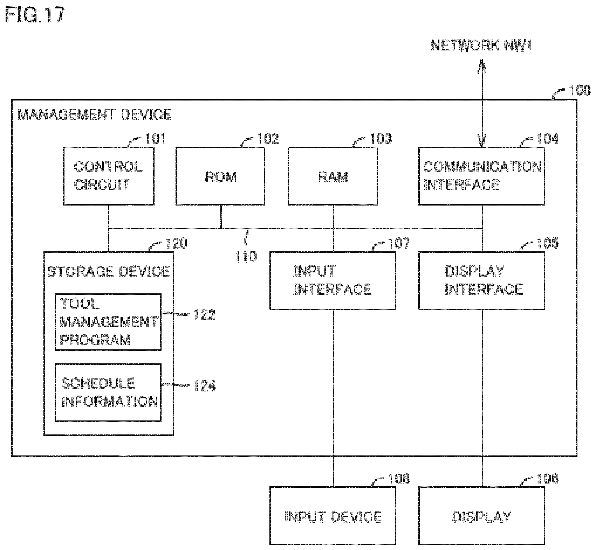

Referring to Fig. 17, a hardware configuration of management device 100 is described. Fig. 17 is a diagram showing one example of hardware configuration of management device 100.

Management device 100 includes a control circuit 101, ROM (Read Only Memory) 102, a RAM (Random Access Memory) 103, a communication interface 104, a display interface 105, an input interface 107, and a storage device 120. These components are connected to a bus 110.

Control circuit 101 is configured, for example, by at least one integrated circuit. The integrated circuit can be configured by, for example, at least one CPU (Central Processing Unit), at least one GPU (Graphics Processing Unit), at least one ASIC (Application Specific Integrated Circuit), at least one FPGA (Field Programmable Gate Array), or combination thereof and the like.

Control circuit 101 controls operations of management device 100 by executing a tool management program 122 and various programs of an operating system or the like. Control circuit 101 reads out tool management program 122 from storage device 120 or ROM 102 to RAM 103 in response to reception of a command for executing tool management program 122. RAM 103 functions as working memory, and temporarily stores various data required for executing tool management program 122.

To communication interface 104, LAN (Local Area Network), antenna and the like are connected. Management device 100 is connected to network NW1 via communication interface 104. Thus, management device 100 exchanges data with an external device connected to network NW1. The external device includes, for example, PLC 150, a server (not shown) and the like.

To display interface 105, a display 106 is connected. Display interface 105 transmits an image signal for displaying an image to display 106 according to a command from control circuit 101 or the like. Display 106 displays, for example, an operation screen for receiving a tool carrying-in command, or a selection screen for designating a tool to be transported. Display 106 is, for example, a liquid crystal display, an inorganic EL (Electro Luminescence) display, or other display device. Display 106 may be configured integrally with management device 100, and may be configured separately from management device 100.

To input interface 107, an input device 108 is connected. Input device 108 is, for example, a mouse, a keyboard, a touch panel, or other device capable of receiving an operation by a user. Input device 108 may be configured integrally with management device 100, and may be configured separately from management device 100.

Storage device 120 is, for example, a storage medium such as hard disc or flush memory. Storage device 120 stores tool management program 122 and schedule information 124 and the like. In schedule information 124, a transport order of tools or the like is defined. The storage location of tool management program 122 and schedule information 124 is not limited to storage device 120, and tool management program 122 and schedule information 124 may be stored in a storage area of control circuit 101 (for example, cash memory and the like), ROM 102, RAM 103, an external device (for example, server) and the like.

Tool management program 122 may be provided as a part of a desired program to which it is incorporated, rather than as a single program. In this case, the transport controlling process by tool management program 122 is realized in cooperation with the desired program. Such a program without some module does not apart from the scope of tool management program 122 according to the present embodiment. Further, part or the whole of functions provided by tool management program 122 may be realized by dedicated hardware. Further, management device 100 may be configured in a form of a so-called cloud service in which at least one server executes part of processes of tool management program 122.

### <J. Hardware configuration of PLC 150>

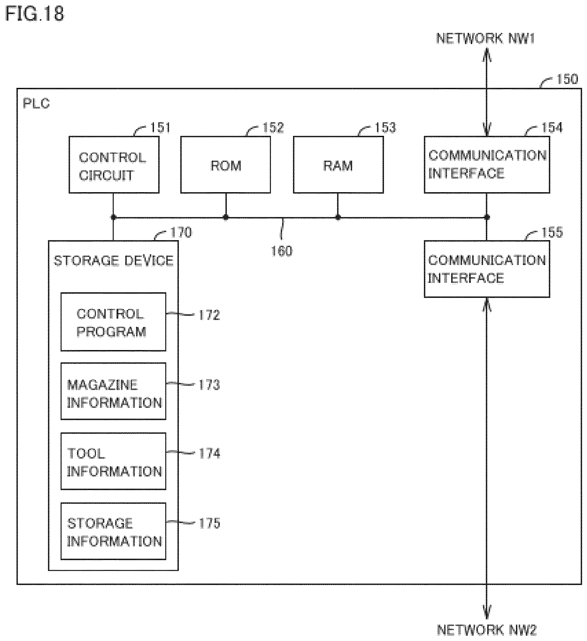

Referring to Fig. 18, one example of hardware configuration of PLC 150 is described. Fig. 18 is a block diagram showing a principal hardware configuration of PLC 150.

PLC 150 includes a control circuit 151, a ROM (Read Only Memory) 152, a RAM (Random Access Memory) 153, a communication interfaces 154, 155, and a storage device 170. These components are connected to a bus 160.

Control circuit 151 is configured by at least one integrated circuit. The integrated circuit is configured, for example, by at least one CPU, at least one MPU (Micro Processing Unit), at least one ASIC, at least one FPGA or combination thereof or the like.

Control circuit 151 controls operations of transport device 300, machine tool 400 and the like by executing various programs such as a control program 172. Control circuit 151 reads out control program 172 from storage device 170 into ROM 152 in response to reception of a command for executing control program 172. RAM 153 functions as working memory, and temporarily stores various data required for executing control program 172.

To communication interface 154, LAN, an antenna and the like are connected. PLC 150 is connected to network NW1 via communication interface 154. Thus, PLC 150 exchanges data with an external device connected to network NW1. The external device includes, for example, management device 100, a server (not shown) and the like.

Communication interface 155 is an interface for connecting to network NW2 which is a filed network. PLC 150 exchanges data with an external device connected to network NW2 via communication interface 155. The external device includes, for example, remote I/O units 61 to 63 described above.

Storage device 170 is, for example, a storage medium such as hard disc or flush memory. Storage device 170 stores control program 172, magazine information 173 described above, tool information described above, and storage information 175 described above and the like. The storage location of these is not limited to storage device 170, and these may be stored in a storage area of control circuit 151 (for example, cash area and the like), ROM 152, RAM 153, an external device (for example, server) and the like.

Control program 172 may be provided as a part of a desired program to which it is incorporated, rather than as a single program. In this case, the control process according to the present embodiment is realized in cooperation with the desired program. Such a program without some module does not apart from the scope of control program 172 according to the present embodiment. Further, part or the whole of functions provided by control program 172 may be realized by dedicated hardware. Further, PLC 150 may be configured in a form of a so-called cloud service in which at least one server executes part of processes of control program 172.

### <K. Hardware configuration of operation terminal 200A>

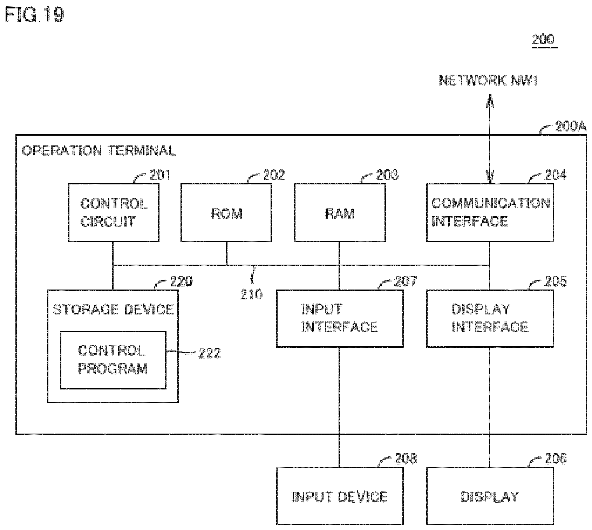

Referring to Fig. 19, hardware configuration of operation terminal 200A shown in Fig. 1 is described. Fig. 19 is a diagram showing one example of hardware configuration of operation terminal 200A.

Operation terminal 200A includes a control circuit 201, a ROM 202, a RAM 203, a communication interface 204, a display interface 205, an input interface 207, and a storage device 220. These components are connected to a bus 210.

Control circuit 201 is configured, for example, by at least one integrated circuit. The integrated circuit can be configured, for example, by at least one CPU, at least one GPU, at least one ASIC, at least one FPGA or combination thereof or the like.

Control circuit 201 controls operations of operation terminal 200A by executing a control program 222 and various programs of an operating system or the like. Control circuit 201 reads out control program 222 from storage device 220 or ROM 202 into RAM 203 in response to reception of a command for executing control program 222. RAM 203 functions as working memory, and temporarily stores various data required for executing control program 222.

To communication interface 204, LAN, an antenna and the like are connected. Operation terminal 200A is connected to network NW1 via communication interface 204. Thus, operation terminal 200A exchanges data with an external device connected to network NW1. The external device includes, for example, PLC 150, a server (not shown) and the like.

To display interface 205, a display 206 is connected. Display interface 205 transmits an image signal for displaying an image to display 206 according to a command from control circuit 201 or the like. Display 206 displays, for example, an operation screen for receiving a tool carrying-in command, or a selection screen for designating a tool to be transported. Display 206 is, for example, a liquid crystal display, an inorganic EL display, or other display device. Display 206 may be configured integrally with operation terminal 200A, and may be configured separately from operation terminal 200A.

To input interface 207, an input device 208 is connected. Input device 208 is, for example, a mouse, a keyboard, a touch panel, or other device capable of receiving an operation by a user. Input device 208 may be configured integrally with operation terminal 200A, and may be configured separately from operation terminal 200A.

Storage device 220 is, for example, a storage medium such as hard disc or flush memory. Storage device 220 stores control program 222 and the like. The storage location of control program 222 is not limited to storage device 220, and these may be stored in a storage area of control circuit 201 (for example, cash memory and the like), ROM 202, RAM 203, an external device (for example, server) and the like.

Control program 222 may be provided as a part of a desired program to which it is incorporated rather than as a single program. In this case, the control process by control program 222 is realized in cooperation with the desired program. Such a program without some module does not apart from the scope of control program 222 according to the present embodiment. Further, part or the whole of functions provided by control program 222 may be realized by dedicated hardware. Further, operation terminal 200A may be configured in a form of a so-called cloud service in which at least one server executes part of processes of control program 222.

### <L. Conclusion>

In the manner as described above, tool holders TP1, TP2 have common connection mechanism 258, and attachment mechanisms 259A, 259B complying with different tool standards. Since tool holders TP1, TP2 are stored in holding part 254 of tool storage portion 250 via common connection mechanism 258, it is no longer necessary to provide tool storage portion 250 for each tool standard. As a result, configuration of tool storage portion 250 is simplified, and the number of assembling steps of tool transport system 10 is reduced. Since tool holders TP1, TP2 can be stored in any place of tool storage portion 250, it becomes possible to utilize the storage space of tool storage portion 250 adequately.

It is to be understood that the embodiments disclosed herein are illustrative, but are not restrictive in every respect. The scope of the present invention is indicated by the appended claims rather than by the description described above, and it is intended that all modifications within the equivalent meaning and scope of the claims are included.

### REFERENCE SIGNS LIST

10: tool transport system, 50: controller, 61 to 63: remote I/O unit, 100: management device, 101, 151, 201: control circuit, 102, 152, 202: ROM, 103, 153, 203: RAM, 104, 154, 155, 204: communication interface, 105, 205: display interface, 106, 206: display, 107, 207: input interface, 108, 208: input device, 110, 160, 210: bus, 120, 170, 220: storage device, 122: tool management program, 124: schedule information, 172, 222: control program, 173: magazine information, 174: tool information, 175: storage information, 200: tool setup device, 200A: operation terminal, 231: cover body, 234, 234A, 234B, 334, 334A, 334B, 411, 411A, 411B: motor driver, 235, 235A, 235B, 335, 335A, 335B, 412, 412A, 412B: motor, 236A, 236B: roller, 237A, 237B: pot holder, 238, 438: ATC, 250: tool storage portion, 252: plate member pair, 252A, 252B: plate member, 253: screw hole, 254: holding part, 256: collar, 256A, 256B: notch group, 258: connection mechanism, 259A, 259B: attachment mechanism, 261 to 264, 266, 267: groove part, 271 to 274: guide part, 300: transport device, 330: arm robot, 331: rail, 332: carriage, 336: temporary storage place, 400, 400A to 400F: machine tool

## Claims

1. A tool transport system comprising:
a plurality of machine tools;
a tool storage portion having a plurality of holding parts, each of the plurality of holding parts having a common holding mechanism capable of holding any of a plurality of tool holders; and
a transport device that transports a designated tool holder of the plurality of tool holders stored in the tool storage portion to a designated machine tool of the plurality of machine tools,
a first tool holder of the plurality of tool holders having
a common connection mechanism that is connectable to the common holding mechanism, and
a first attachment mechanism to which a first tool to be used in a first machine tool of the plurality of machine tools is attachable,
a second tool holder of the plurality of tool holders having
the common connection mechanism, and
a second attachment mechanism to which a second tool to be used in a second machine tool of the plurality of machine tools is attachable.

2. The tool transport system according to claim 1, further comprising a tool setup device that exchanges a tool holder with the transport device,
the tool setup device including
a magazine that is capable of holding a plurality of tool holders,
a driver that drives the magazine, and
a controller that controls driving of the driver,
the controller executing
a process of driving the first tool holder to a predetermined setup position when the first tool is designated as a tool to be setup, and
a process of driving the second tool holder to the predetermined setup position when the second tool is designated as a tool to be setup.

3. A tool transport system according to claim 2, wherein
the tool to be setup is provided with a reading code for uniquely identifying the tool,
the tool setup device further includes a reading device that reads the reading code, and
the controller executes
a process of determining whether the tool to be setup is attachable to the tool holder driven to the predetermined setup position on the basis of a reading result of the reading code by the reading device, and
a process of outputting an alert when it is determined that the tool to be setup is not attachable to the tool holder driven to the predetermined setup position.

4. The tool transport system according to any one of claims 1 to 3, further comprising a transport path, wherein
the tool storage portion is provided in parallel with the transport path, and
the transport device moves on the transport path.

5. The tool transport system according to any one of claims 1 to 4, wherein
the common connection mechanism has
a first groove part disposed on a first surface of the tool holder,
a second groove part disposed in parallel with the first groove part on the first surface,
a third groove part disposed on a second surface of the tool holder, and
a fourth groove part disposed in parallel with the second groove part on the second surface,
the first surface and the second surface face each other, and
the common holding mechanism has
a first guide part that fits with the first groove part,
a second guide part that fits with the second groove part,
a third guide part that fits with the third groove part, and
a fourth guide part that fits with the fourth groove part.

6. The tool transport system according to claim 5, wherein
the tool storage portion is configured by combining a first plate member and a second plate member,
the first plate member and the second plate member are provided to face each other,
the first guide part and the third guide part are formed on the first plate member, and
the second guide part and the fourth guide part are formed on the second plate member.

7. A control method for a tool transport system,
the tool transport system including
a plurality of machine tools, and
a tool storage portion having a plurality of holding parts, each of the plurality of holding parts having a common holding mechanism capable of holding any of a plurality of tool holders,
the tool transport system further including
a transport device that transports a designated tool holder of the plurality of tool holders stored in the tool storage portion to a designated machine tool of the plurality of machine tools,
a first tool holder of the plurality of tool holders having
a common connection mechanism that is connectable to the common holding mechanism, and
a first attachment mechanism to which a first tool to be used in a first machine tool of the plurality of machine tools is attachable,
a second tool holder of the plurality of tool holders having
the common connection mechanism, and
a second attachment mechanism to which a second tool to be used in a second machine tool of the plurality of machine tools is attachable,
the tool transport system further including
a tool setup device that exchanges a tool holder with the transport device,
the tool setup device including
a magazine that is capable of holding a plurality of tool holders, and
a driver that drives the magazine,
the control method comprising:
driving the first tool holder to a predetermined setup position when the first tool is designated as a tool to be setup; and
driving the second tool holder to the predetermined setup position when the second tool is designated as a tool to be setup.

8. A control program for a tool transport system,
the tool transport system including
a plurality of machine tools, and
a tool storage portion having a plurality of holding parts, each of the plurality of holding parts having a common holding mechanism capable of holding any of a plurality of tool holders,
the tool transport system further including
a transport device that transports a designated tool holder of the plurality of tool holders stored in the tool storage portion to a designated machine tool of the plurality of machine tools,
a first tool holder of the plurality of tool holders having
a common connection mechanism that is connectable to the common holding mechanism, and
a first attachment mechanism to which a first tool to be used in a first machine tool of the plurality of machine tools is attachable,
a second tool holder of the plurality of tool holders having
the common connection mechanism, and
a second attachment mechanism to which a second tool to be used in a second machine tool of the plurality of machine tools is attachable,
the tool transport system further including
a tool setup device that exchanges a tool holder with the transport device,
the tool setup device including
a magazine that is capable of holding a plurality of tool holders, and
a driver that drives the magazine,
the control program causing the tool transport system to execute:
driving the first tool holder to a predetermined setup position when the first tool is designated as a tool to be setup; and
driving the second tool holder to the predetermined setup position when the second tool is designated as a tool to be setup.
